# EUROPEAN PATENT APPLICATION

(11) **EP 4 769 214 A1**
(43) Date of publication of application: **01.07.2026**
(21) Application number: 25220162.9
(22) Date of filing: 02.12.2025
(51) Int. Cl.: G06K 7/10, G01S 13/86

(54) **SYSTEM AND METHOD FOR POWER OPTIMIZED RFID SCANNING AND RFID TAG LOCALIZATION**

(30) Priority: 31.12.2024 IN 202411104956
(71) Applicant: Hand Held Products, Inc., Charlotte, NC 28202 (US)
(72) Inventor: MATHUR, Abhishek, Charlotte, 28202 (US); DOBECK, Brian, Charlotte, 28202 (US); JOHNSON, Donald Matthew, Charlotte, 28202 (US); PARIKH, Chirant, Charlotte, 28202 (US); PATEL, Rajiv, Charlotte, 28202 (US); RAMAMURTHY, Shashidhar, Charlotte, 28202 (US)
(74) Representative: Haseltine Lake Kempner LLP

(57) **Abstract**

A system and method for power optimized RFID scanning and RFID tag localization is disclosed. The system comprises at least one antenna coupled to a radio frequency identification (RFID) reader configured to read at least one RFID tag associated with at least one package. Further, at least one radar sensor is communicatively coupled to the RFID reader. The at least one radar sensor is configured to detect a position of the at least one RFID tag associated with the at least one package. Further, the RFID reader is configured to select at least one antenna based on the detected position of the at least one RFID tag. The RFID reader is further configured to direct the at least one antenna towards the detected position of the at least one RFID tag.

## Description

### FIELD OF THE INVENTION

An example embodiment relates generally to a radio frequency identification (RFID) system and more particularly, to a system and method for power optimized RFID scanning and RFID tag localization.

### BACKGROUND

Logistics and supply chain management require efficient parcel tracking and localization. RFID technology has emerged as a robust solution, employing RFID readers to scan RFID tags affixed to packages, enabling real-time monitoring and inventory management. In general, RFID readers are categorized into two categories - fixed readers, relying on external power source and battery-powered handheld or wearable RFID readers that have limited read range. None of the above reader types provide standalone solutions to adequately address the specific needs of package identification and locationing throughout the supply chain, including warehouses and delivery vehicles. This warrants the integration of indoor positioning systems like ultra-wide band (UWB), Bluetooth low energy (BLE), and Software solutions with existing automatic identification and data capture (AIDC) infrastructure to provide comprehensive supply chain management solutions while minimizing deployment costs. Also, customers need package location information in indoor-like environments and want to save cost and effort on deploying additional infrastructure. Further, another problem associated with the current systems is that the cost of deployment is very high.

Applicant has identified various issues and challenges associated with the current systems. However, with creativity, hard work, and innovation, the present disclosure has addressed many of these problems through its methods and systems.

### SUMMARY

The following presents a simplified summary in order to provide a basic understanding of some aspects of the present disclosure. This summary is not an extensive overview and is intended to neither identify key or critical elements nor delineate the scope of such elements. Its purpose is to present some concepts of the described features in a simplified form as a prelude to the more detailed description that is presented later.

In an example embodiment, a system is disclosed. The system comprises at least one antenna coupled to a radio frequency identification (RFID) reader configured to read at least one RFID tag associated with at least one package. Further, at least one radar sensor is communicatively coupled to the RFID reader, and configured to detect a position of the at least one RFID tag associated with the at least one package. The RFID reader is configured to select at least one antenna based on the detected position of the at least one RFID tag. Further, the RFID reader is configured to direct the at least one antenna towards the detected position of the at least one RFID tag.

In some embodiments, the RFID reader is switched between an active mode and a low power mode based at least on the detection of the at least one RFID tag. In some embodiments, the RFID reader is configured to generate a directional RF beam to read the at least one RFID tag. In some embodiments, the at least one antenna encompasses a defined zone inside an enclosed space. In some embodiments, the enclosed space comprises at least one of a warehouse, a distribution center, a retail store, a delivery vehicle, a room, or a package car.

In some embodiments, the position corresponds to location coordinates of the at least one RFID tag associated with the at least one package within the enclosed space. In some embodiments, the at least one radar sensor corresponds to millimeter wave (mmwave) radar sensor.

In another example embodiment, a method is disclosed. The method comprises the steps of detecting, via at least one radar sensor, a position of at least one radio frequency identification (RFID) tag associated with at least one package. Further, activating, via the at least one radar sensor, a radio frequency identification (RFID) reader. Further, selecting, via the RFID reader, at least one antenna based on the detected position of the at least one RFID tag. Thereafter, directing, via the RFID reader, the at least one antenna towards the detected position of the at least one RFID tag.

In some embodiments, the method further comprises switching the RFID reader between an active mode and a low power mode based at least on the detection of the at least one RFID tag. Further, the method comprises generating, via the RFID reader, a directional RF beam to read the at least one RFID tag.

The above summary is provided merely for purposes of summarizing some example embodiments to provide a basic understanding of some aspects of the invention. Accordingly, it will be appreciated that the above-described embodiments are merely examples and should not be construed to narrow the scope or spirit of the invention in any way. It will be appreciated that the scope of the invention encompasses many potential embodiments in addition to those here summarized, some of which will be further described below.

### BRIEF DESCRIPTION OF THE DRAWINGS

Having thus described certain example embodiments of the present disclosure in general terms, reference will hereinafter be made to the accompanying drawings, which are not necessarily drawn to scale, and wherein:
FIG. 1A illustrates a top view of a system for power optimized radio frequency identification (RFID) scanning and RFID tag localization, in accordance with an example embodiment of the present disclosure;
FIG. 1B illustrates a bottom view of the system, in accordance with an example embodiment of the present disclosure;
FIG. 1C illustrates the system installed inside an enclosed space, in accordance with an example embodiment of the present disclosure;
FIG. 1D illustrates an integrated radar sensor of the system detecting motion inside the enclosed space, in accordance with an example embodiment of the present disclosure;
FIG. 1E illustrates a defined zone covered by an antenna of the system, in accordance with an example embodiment of the present disclosure;
FIG. 2A illustrates a system for power optimized RFID scanning and RFID tag localization, in accordance with another example embodiment of the present disclosure;
FIG. 2B illustrates the radar detecting motion inside the enclosed space, in accordance with another example embodiment of the present disclosure;
FIG. 2C illustrates a defined zone covered by an antenna of the system, in accordance with another example embodiment of the present disclosure;
FIG. 3 illustrates another system for power optimized RFID scanning and RFID tag localization, in accordance with another example embodiment of the present disclosure; and
FIG. 4 illustrates a flowchart showing a method for power optimized RFID scanning and RFID tag localization, in accordance with an example embodiment of the present disclosure.

### DETAILED DESCRIPTION OF THE INVENTION

Some embodiments will now be described more fully hereinafter with reference to the accompanying drawings, in which some, but not all, embodiments are shown. Indeed, various embodiments may be embodied in many different forms and should not be construed as limited to the embodiments set forth herein; rather, these embodiments are provided so that this disclosure will satisfy applicable legal requirements. As discussed herein, the protection devices may be referred to use by humans, but may also be used to raise and lower objects unless otherwise noted.

The components illustrated in the figures represent components that may or may not be present in various embodiments of the invention described herein such that embodiments may include fewer or more components than those shown in the figures while not departing from the scope of the invention. Some components may be omitted from one or more figures or shown in dashed line for visibility of the underlying components.

The various embodiments disclosed herein are discussed in the context of radio frequency identification (RFID) reader, RFID tags, antennas, and radar sensors. However, the systems, antennas, and methods discussed herein have application beyond RFID tags to other types of electromagnetic wave-based technologies. The discussion of any embodiment in relation to RFID tags is meant only to be illustrative of that embodiment, and not intended to intimate that the scope of the disclosure, including the claims, is limited to that embodiment.

Various embodiments of the present disclosure disclose a system and method for power optimized radio frequency identification (RFID) scanning and RFID localization. The system and method comprises of high accuracy, low power, 3D motion sensor like a radar sensor, a low power RFID reader, directional RFID antennas. In some example embodiments, the directional RFID antennas trigger RFID scanning in tandem with motion detection. Each directional antenna encompasses a defined zone inside a vehicle, such that when an individual walks-in the defined zone to place a package, his/her position is tracked by the radar sensor. Further, when the gesture/body movement to place the package is performed, the gesture/body movement is detected, and the RFID reader of corresponding zone is turned on to read RFID tag of the package. The RFID tag of the package may comprise a Package ID. The package ID along with position coordinates is saved in a database. The system is configured to be ON till motion is detected by the radar sensor. Further, the system goes to extreme low power mode in absence of any activity thereby saving the battery power. In the present disclosure, RFID tag reads are correlated with target movement information provided by the radar sensor to infer the package position.

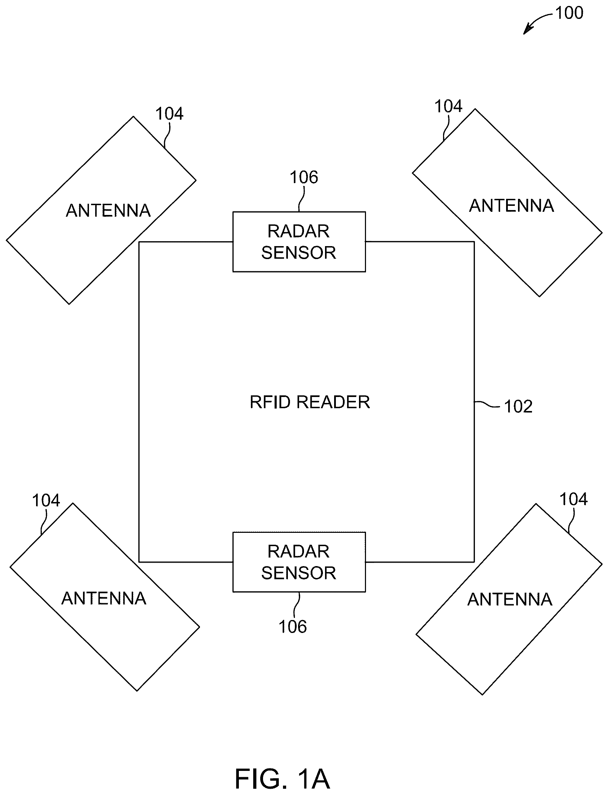

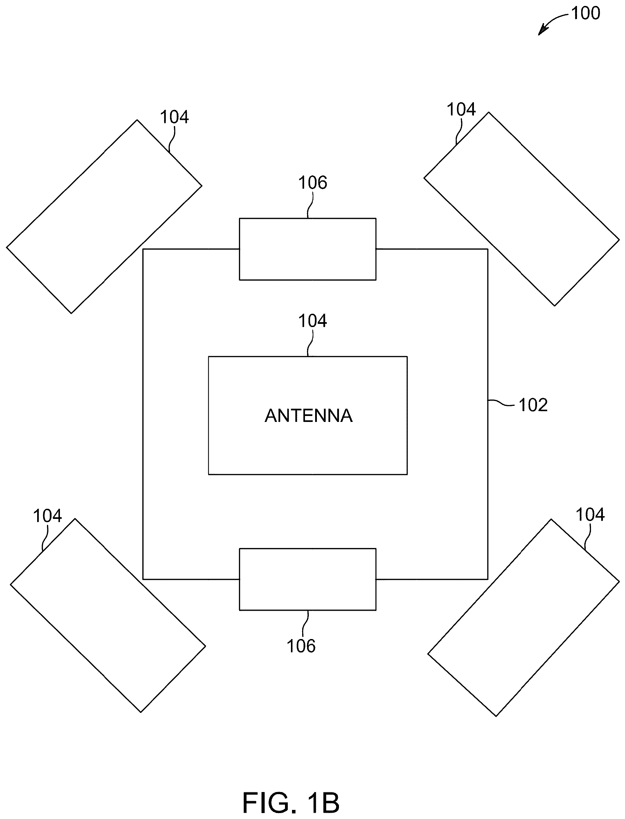

FIG. 1A illustrates a top view of a system 100 for power optimized radio frequency identification (RFID) scanning and RFID tag localization, in accordance with an example embodiment of the present disclosure. FIG. 1A is described in conjunction with FIGS. 1B-1E.

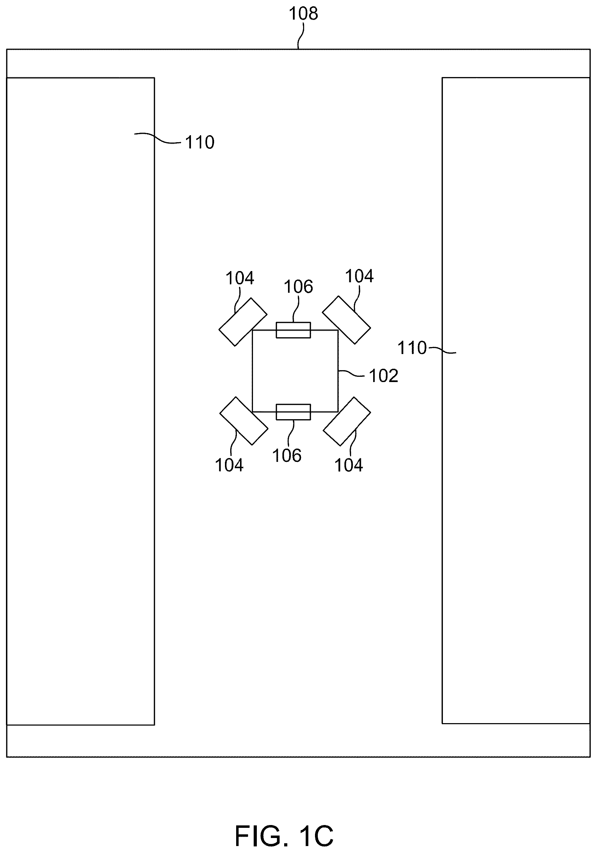

The system 100 may comprise a RFID reader 102, a plurality of antennas 104 and at least one radar sensor 106. The plurality of antennas 104 may be coupled to the RFID reader 102. It may be noted that the system 100 may be installed inside an enclosed space 108 having one or more shelves 110, as illustrated in FIG. 1C. In some embodiments, the enclosed space 108 may be a warehouse, a distribution center, a retail store, a delivery vehicle, a room, a package car, etc. It should be noted that the system 100 may be installed outside the enclosed space 108 as well, without departing from the scope of the disclosure.

In some embodiments, the plurality of antennas 104 may be directional antennas. The plurality of antennas 104 may radiate or receive one or more signals more effectively in one specific direction inside the enclosed space 108. The plurality of antennas 104 may focus towards the one specific direction for improved signal strength and better communication. Further, the at least one antenna of the plurality of antenna 104 may be coupled to bottom of the RFID reader 102, as illustrated in FIG. 1B. Further, the plurality of antennas 104 may encompass a defined zone (not shown) inside the enclosed space 108 illustrated in FIG. 1C.

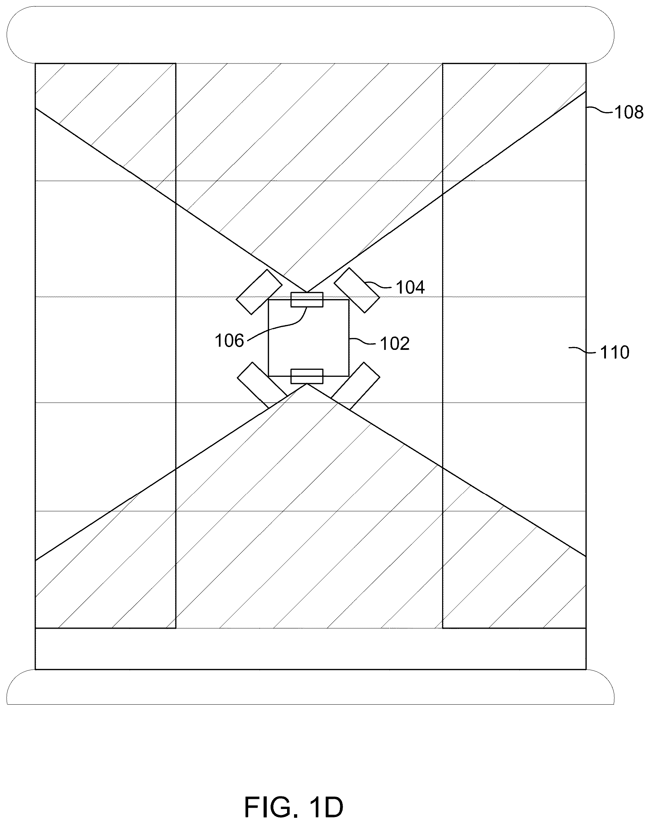

In some embodiments, the at least one radar sensor 106 may be communicatively coupled to the RFID reader 102. In some embodiments, the at least one radar sensor 106 may be selected from a group of radar sensors including, but not limited to, a millimeter wave (mm wave) radar sensor, a continuous wave (CW) radar sensor, a pulsed radar sensor, a monostatic radar sensor, a Doppler radar sensor, or a phased array radar sensor. The at least one radar sensor 106 may have a bigger field of view (FOV) for wider coverage inside the enclosed space 108, as illustrated in FIG. 1D. With the bigger FOV, the at least one radar sensor 106 may provide high accuracy in covering the enclosed space 108.

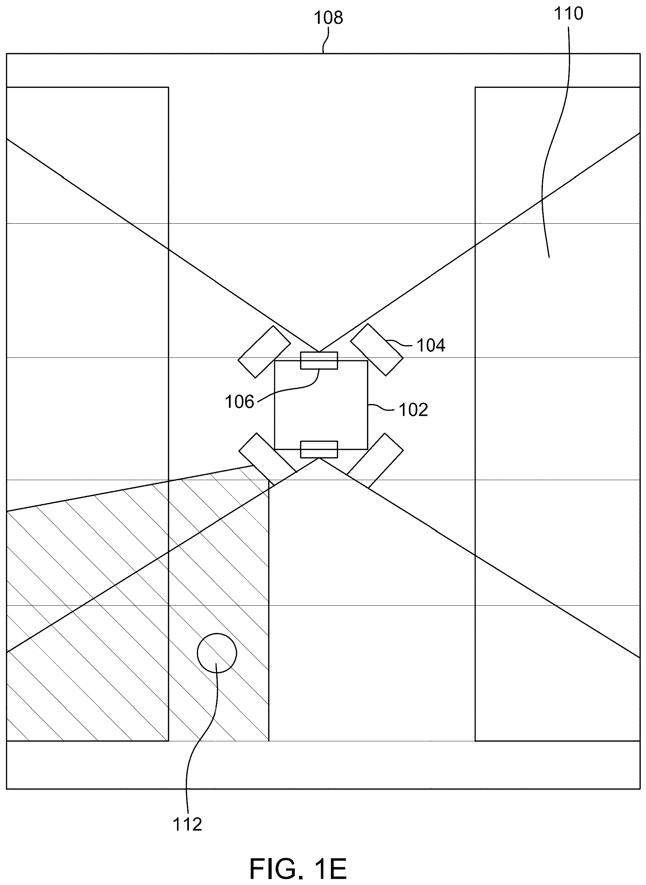

In some embodiments, the at least one radar sensor 106 may be configured to detect a position of the at least one RFID tag (not shown) associated with at least one package 112 within the enclosed space 108, as illustrated in FIG. 1E. It may be noted that the position may correspond to location coordinates of the at least one RFID tag associated with the at least one package 112 within the enclosed space 108. The location coordinates may comprise two-dimensional (2D) coordinates or three-dimensional (3D) coordinates of the at least one RFID tag. Further, the at least one RFID tag may contain a unique identifier of the at least one package 112. In some embodiments, the unique identifier may be a package ID of the at least one package 112.

In some embodiments, the at least one radar sensor 106 may detect the gesture or a body movement when a person walks-in to place the at least one package on a shelf from the one or more shelves 110 inside the enclosed space 108. The gesture or the body movement may be used interchangeably. It may be noted that the gesture may involve physically moving the at least one package 112 towards or away from the enclosed space 108. Further, the gesture or body movement may involve physically moving the at least one package 112 towards or away from the system 100 installed inside the enclosed space 108.

Further, as the gesture may be performed and the at least one package 112 may be moved towards the enclosed space 108, the at least one RFID tag may come within the range of the at least one radar sensor 106. Thereafter, the at least one radar sensor 106 may emit one or more radio waves (not shown), via a transmitter (not shown), to detect the presence/movement of at least one RFID tag. In some embodiments, the at least one radar sensor 106 may be configured to capture the location coordinates of the at least one RFID tag, based at least on the detected presence/movement of the at least one RFID tag.

In some embodiments, the emitted one or more radio waves may bounce off the at least one RFID tag. Further, the bounced off one or more radio waves may be received by a receiver (not shown) of the at least one radar sensor 106. The receiver may further process the received one or more radio waves. In one example embodiment, the at least one radar sensor 106 may then determine the distance between the at least one radar sensor 106 and the at least one RFID tag by analyzing the time delay between the at least one radar sensor 106 and the at least one RFID tag. In another example embodiment, the at least one radar sensor 106 may determine the distance between the at least one radar sensor 106 and the at least one RFID tag by analyzing a phase delay between the at least one radar sensor 106 and the at least one RFID tag.

Further, based on the known position of the at least one radar sensor 106 and the determined distance of the at least one RFID tag from the at least one radar sensor 106, the position of the at least one RFID tag may be determined. After detecting the position of the at least one RFID tag, the at least one radar sensor 106 may send a signal to the RFID reader 102 via the transmitter. The signal may comprise information of the detected position of the at least one RFID tag. The information may also include position coordinates of the at least one RFID tag. In some embodiments, the position coordinates may include x and y coordinates of the at least one package.

In some embodiments, after detecting position, the at least one radar sensor 106 may be configured to activate the RFID reader 102 to read at least one RFID tag associated with at least one package. In some example embodiments, the at least one radar sensor 106 may communicate with the RFID reader 102 and the plurality of antennas 104 over a wired or a wireless interface. In some embodiments, a wireless module may further be added to the system 100 to communicate over the wireless interface.

In some embodiments, the RFID reader 102 may be configured to select at least one antenna from the plurality of antennas 104 based on the detected position of the at least one RFID tag. The RFID reader 102 may be configured to turn on the at least one antenna from the plurality of antennas 104. In some embodiments, the RFID reader 102 may be configured to transmit RF power to turn on the at least one antenna. The at least one RFID tag associated with at least one package may get energized by the RF power received form the RFID reader 102. Further, the at least one RFID tag energized by the RF power may become active. Thereafter, the at least one antenna may initiate communicating with the RFID reader 102. The selected at least one antenna may be configured to encompass the defined zone based on the detected position inside the enclosed space 108, that is, each of the plurality of antennas may cover a particular area or direction inside the enclosed space 108. It may be noted that the detected position may correspond to location coordinates of the at least one RFID tag associated with the at least one package 112 within the enclosed space 108. The RFID reader 102 may select the at least one antenna that may be best suited for communicating with the at least one RFID tag within the defined zone inside the enclosed space 108. The RFID reader 102 may further direct the at least one antenna towards the detected position of the at least one RFID tag. The RFID reader 102 may further be configured to read at least one RFID tag associated with at least one package 112 with the directed at least one antenna 104. Further, the at least one RFID tag may begin transmitting the unique identifier of the at least one package.

In some embodiments, the RFID reader 102 may generate a directional RF beam to read the at least one RFID tag. In some other embodiments, the RFID reader 102 may be configured to direct the at least one antenna to radiate the RF beam in the direction identified by the at least one radar sensor 106. Upon reading the at least one RFID tag associated with the at least one package, the RFID reader 102 may also read the unique identifier or the package ID. The read package ID as well as the position coordinates may further be saved in a database (not shown).

In some embodiments, there may be several types of at least one RFID tag operable. For example, the at least one RFID tag may be active tags, meaning each RFID tag comprises its own internal battery. Using power from the internal battery, an active RFID tag monitors the directional RF beam from the RFID reader 102. When the directional RF beam is sensed, a response comprising a data or identification value is transmitted by the active RFID tag using power from its internal battery. A semi-active tag may likewise have its own internal battery. However, a semi-active tag stays dormant most of the time. When an antenna of a semi-active tag receives the directional RF beam, the power received is used to wake or activate the semi-active tag. And a response comprising an identification value is sent by the semi-active RFID tag using power from its internal battery.

Further, a third type of RFID tag may be a passive tag, which, unlike active and semi-active RFID tags, has no internal battery. The antenna of the passive RFID tag receives the directional RF beam comprising RF power. The RF power extracted from the received directional RF beam from the RFID reader 102 may be used to power the tag. In some embodiments, the RFID reader 102 may be configured to direct the at least one antenna to radiate the RF beam in the direction identified by the at least one radar sensor 106. Once powered, the passive RFID tag may accept a command, send a response comprising a data or identification value, or both to the RFID reader 102. In particular, the RFID reader 102 continue to transmit power after the at least one RFID tag is awake.

In some embodiments, the RFID reader 102 may be switched between an active mode and a low power mode. Based on the low power mode or the active mode of the RFID reader 102, the system 100 may switch between the low power mode or the active mode, respectively. The RFID reader 102 may be switched based at least on the determination of the at least one RFID tag. In some embodiments, the RFID reader 102 may operate in the active mode when the at least one RFID tag may be located at far away from the RFID reader 102. Further, the active mode may indicate that the RFID reader 102 may operate at full capacity or in a normal energy consumption state. In some embodiments, the RFID reader 102 may operate in the low power mode when the at least one RFID tag may be located close to the RFID reader 102. Further, the low power mode may indicate that the RFID reader 102 may operate in half capacity or in a reduced energy consumption state. The at least one radar sensor 106 may always be in "ON" state. In absence of any movement/ at least one RFID tag, the RFID reader 102 may put itself in low power mode with the at least one radar sensor 106 in "ON" state. The at least one radar sensor 106 may wake up the system 100, when the at least one radar sensor detects any movement of the at least one RFID tag, such that the system 100 switches to active mode. The aforementioned switching of the RFID reader 102 between the active state and the low power state may help to optimize energy consumption of the RFID reader 102, while maintaining the functionality of the RFD reader in the system 100, at the same time.

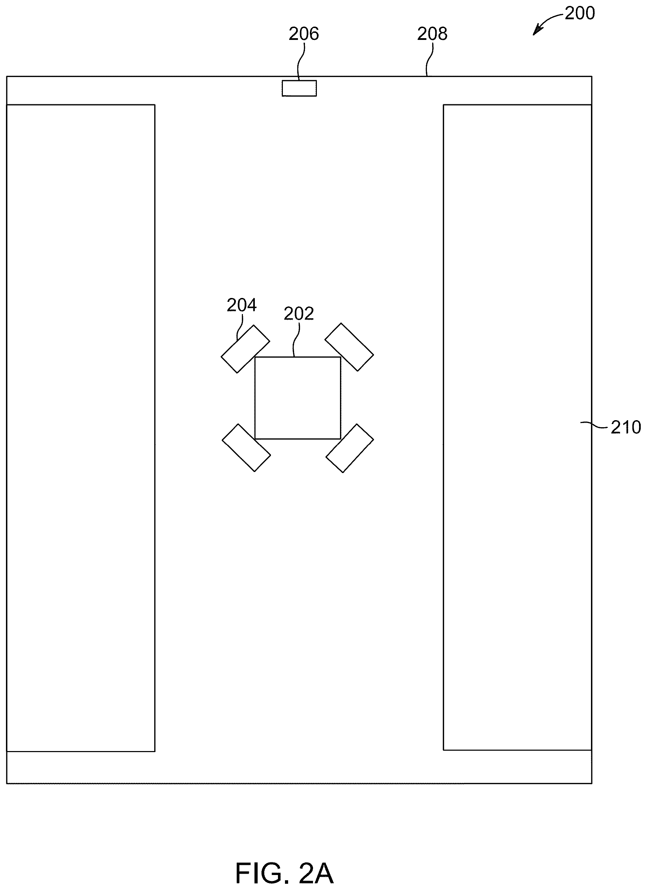

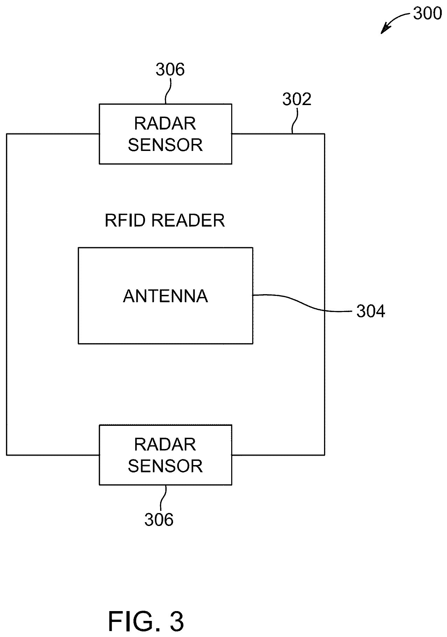

In various embodiments, different configurations and arrangements of the RFID reader 102, the at least one antenna 104 and the at least one radar sensor 106 of the system 100 may be implemented inside the enclosed space 108, which is described in greater detail in FIGS. 2A-2C and FIG. 3.

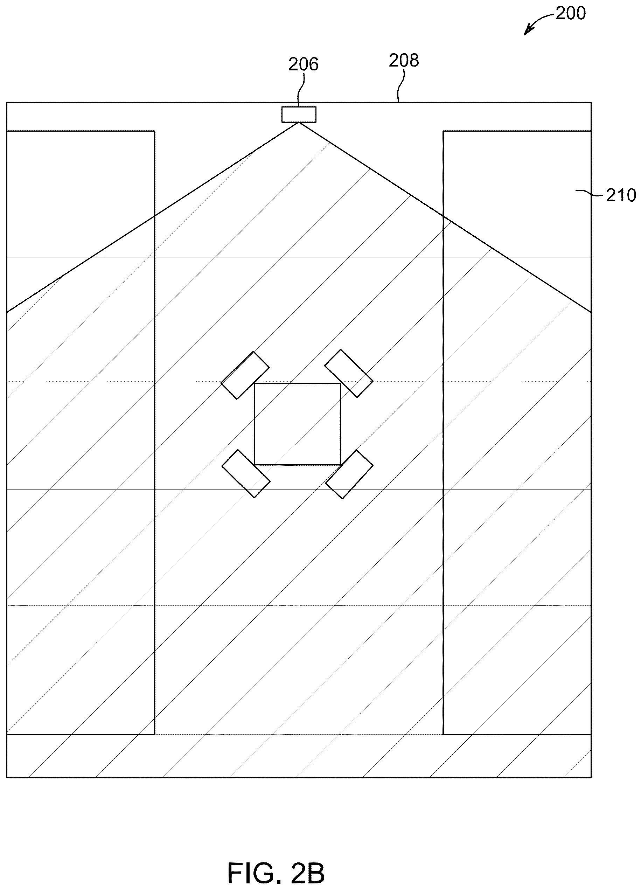

FIG. 2A illustrates a system 200 for power optimized RFID scanning and RFID tag localization, in accordance with an example embodiment of the present disclosure. FIG. 2A is described in conjunction with FIGS. 2B-2C.

The system 200 may comprise a RFID reader 202, plurality of antennas 204 and at least one radar sensor 206. The plurality of antennas 204 may be coupled to the RFID reader 202. The RFID reader 202 may be coupled inside an enclosed space 208. The enclosed space 208 may include one or more shelves 210. Further, the at least one radar sensor 206 may be installed inside the enclosed space 208. The at least one radar sensor 206 may be communicatively coupled to the RFID reader 202.

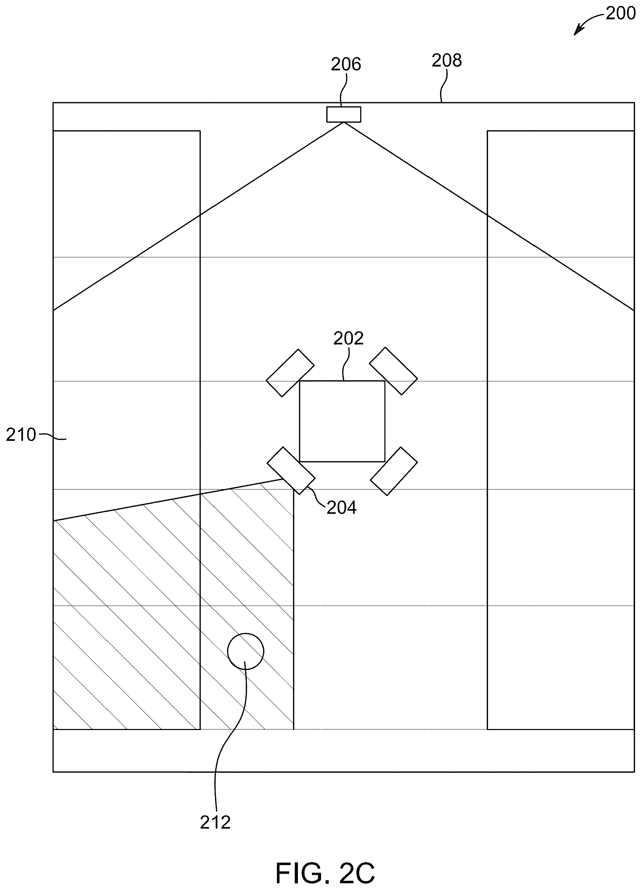

In some embodiments, the at least one radar sensor 206 may be configured for detecting motion inside the enclosed space 208 as shown in FIG. 2B. Further, the at least one radar sensor 206 may include wider coverage of the enclosed space 208 due to bigger field of view (FOV). Further, the at least one radar sensor 206 may detect motion inside the enclosed space 208 when at least one package 212 may be placed on the one or more shelves 210, as shown in FIG. 2C. Based on the detected motion, the at least one radar sensor 206 may detect position of the at least one RFID tag associated with the at least one package 212.

Further, the at least one radar sensor 206 may activate the RFID reader 202. Further, the RFID reader 202 may be configured to select at least one antenna from the plurality of antennas 204 based on the detected position of the at least one RFID tag. The selected at least one antenna may be configured to encompass a defined zone based on the detected position inside the enclosed space 208, as shown in FIG. 2C. Further, the RFID reader 202 may select the at least one antenna that may be best suited for communicating with the at least one RFID tag within the defined zone inside the enclosed space 208. In some embodiments, the selection of the at least one antenna may be determined based on the determined location of the at least one RFID tag by the RFID reader 202. The RFID reader 202 may further direct the at least one antenna towards the detected position of the at least one RFID tag. It may be noted that the system 200 may have the same functionality as the system 100 shown in FIGS. 1A-1C. As a result, the RFID reader 202 may further be configured to read at least one RFID tag associated with at least one package 212 with the directed at least one antenna 204.

FIG. 3 illustrates a system 300 for power optimized RFID scanning and RFID tag localization, in accordance with an example embodiment of the present disclosure. The system 300 may include an RFID reader 302, an antenna 304, and at least one radar sensor 306.

The antenna 304 may be coupled to the RFID reader 302. The RFID reader 302 may be coupled inside an enclosed space (not shown). It may be noted that the antenna 304 may be a beam steering antenna. It will be apparent one skilled in the art that the antenna beam is directed by using a beam steering or a beam switching antenna. Further, the antenna 304 may control the direction in which it transmits or receives radio frequency (RF) signals. By adjusting the phase and amplitude of the RF signal across, the antenna 304 may dynamically change the direction of its radiation pattern without physically moving the entire antenna 304.

Further, the antenna 304 may allow for improved signal quality, increased coverage, and the ability to focus on the at least one package being placed in the defined zone inside the enclosed space. The antenna 304 may be configured to rotate both horizontally and vertically. The antenna 304 may rotate based on the detected position of the at least one RFID tag to read the package ID of the package.

In some embodiments, at least one radar sensor 306 may be coupled to the RFID reader 302 inside the enclosed space. In some embodiments, the at least one radar sensor 306 may be coupled to the enclosed space. It may be noted that even though the at least one radar sensor 306 may be coupled differently, as discussed in above embodiments, the functionality of the at least one radar sensor 306 remains the same.

Some embodiments also are not limited to UHF (900 MHz) RFID and may be used for the aforementioned systems for other wireless technologies. For e.g., Wi-Fi, wireless WAN, Bluetooth, etc. The other wireless technologies may operate in various other frequency bands. For e.g., 2.4 GHz, 5.8 GHz, etc. The other wireless technologies may be implemented in accordance with the present disclosure.

It may be noted that the functionality of some embodiments may be extended beyond the present disclosure, and may include communication to a microcontroller over RFID, general purpose input/output (GPIO) capabilities such as control LEDs, read sensors, etc.

It may be noted that while some embodiments are described in connection with particular operating characteristics, some embodiments are not limited to the specific operating environment. Thus, some embodiments may be used in connection with different devices or in different applications.

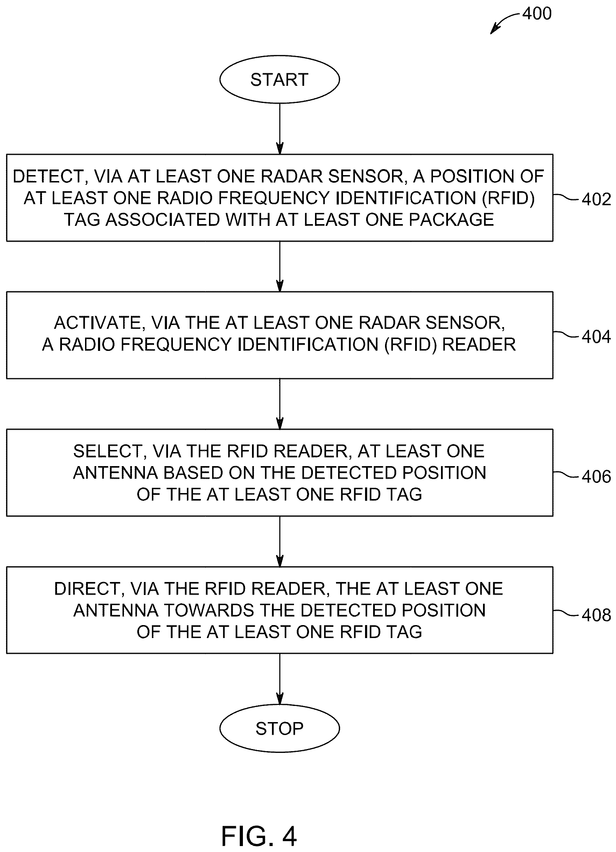

FIG. 4 illustrates a flowchart showing a method 400 for power optimized RFID scanning and RFID tag localization, in accordance with an example embodiment of the present disclosure. It should be appreciated that the method 400 may be implemented by one or more the embodiments disclosed herein, which may be combined or modified as desired or needed. Additionally, the steps in the method 400 may be modified, changed in order, performed differently, performed sequentially, concurrently or simultaneously, or otherwise modified as desired or needed. FIG. 4 is described in conjunction with FIGS. 1A-3.

At first, at least one radar sensor 106 detects a position of at least one radio frequency identification (RFID) tag associated with at least one package, at step 402. Further, the at least one RFID tag may contain a unique identifier of the at least one package. The unique identifier may be a package ID of the at least one package. In some embodiments, the at least one radar sensor 106 may be selected from a group of radar sensors including, but not limited to, a millimeter wave (mmwave) radar sensor, a continuous wave (CW) radar sensor, a pulsed radar sensor, a monostatic radar sensor, a Doppler radar sensor, or a phased array radar sensor.

As aforementioned, when a person may walk-in to place the at least one package, a gesture/body movement to place the at least one package may be performed. It may be noted that the gesture may involve physically moving the at least one package 112 towards or away from the enclosed space 108. Further, the gesture or body movement may involve physically moving the at least one package 112 towards or away from the system 100 installed inside the enclosed space 108. The performed gesture/body movement may be detected and the position of the at least one RFID tag associated with the at least one package that is placed may be detected. For example, a person having a package "A" equipped with a RFID tag, walks-in to place the package "A" inside a package car. The at least one radar sensor 106 installed in the package car scans the area of the package car and detects the exact position of the RFID tag of the package "A", based on a gesture/body movement of the person "A" and the package.

Successively, the at least one radar sensor 106 activates a radio frequency identification (RFID) reader 102, at step 404. After detecting the position of the at least one RFID tag, the at least one radar sensor 106 may send a signal to the RFID reader 102. The signal may comprise information of the detected position of the at least one RFID tag. The information may also include position coordinates of the at least one RFID tag. In some embodiments, after detecting position, The RFID reader 102 may receive the location coordinates of the at least one RFID tag from the at least one radar sensor 106 to read at least one RFID tag associated with at least one package.

For example, after detecting the exact position of the RFID tag of the package "A", the RFID reader 102 receives the location coordinates of the exact position from the at least one radar sensor 106, to read at least one RFID tag associated package "A".

Successively, the RFID reader 102 may select at least one antenna based on the detected position of the at least one RFID tag, at step 406. Further, the at least one antenna 104 may encompass a defined zone inside an enclosed space 108. It may be noted that the position corresponds to location coordinates of the at least one RFID tag associated with the at least one package within the enclosed space 108. The RFID reader 102 may be configured to turn on the at least one antenna from the plurality of antennas 104. In some embodiments, the RFID reader 102 may be configured to transmit RF power to turn on the at least one antenna. The at least one RFID tag associated with at least one package may get energized by the RF power received form the RFID reader 102. Further, the at least one RFID tag energized by the RF power may become active. Thereafter, the at least one antenna may initiate communicating with the RFID reader 102.

The RFID reader 102 may select the at least one antenna 104 that may be best suited for communicating with the at least one RFID tag within the defined zone inside the enclosed space 108. The RFID reader 102 may select the at least one antenna 104 best suited for communicating with the at least one RFID tag based at least on the detected position of the at least one RFID tag. In some embodiments, the RFID reader 102 may be configured to receive the location coordinates of the at least one RFID tag from the at least one radar sensor 106 to select the at least one antenna 104 to be turned on. The location coordinates may comprise two-dimensional (2D) coordinates or three-dimensional (3D) coordinates of the at least one RFID tag.

For example, at least one antenna 104, best suited for communicating with the package "A", is selected by a RFID reader 102 installed within the package car based on the detected position of the package "A".

Successively, the RFID reader 102 directs the at least one antenna 104 towards the detected position of the at least one RFID tag, at step 408. The selected at least one antenna 104 may be directed towards the detected position to ensure that the communication between the selected at least one antenna 104 and the at least one RFID tag is optimized and robust.

In some embodiments, the RFID reader 102 may generate a directional RF beam to read the selected at least one RFID tag. Post reading the at least one RFID tag associated with the at least one package, the RFID reader 102 may also read the unique identifier or the package ID. The read package ID as well as the position coordinates may further be saved in a database (not shown)

For example, the RFID then directs the selected at least one antenna 104 towards the detected position to read the RFID tag associated with the package "A". To read the RFID tag, the RFID reader 102 may generate a RF beam directed towards the RFID tag to establish communication and retrieve data associated with the RFID tag.

In some embodiments, the method 400 further comprises switching the RFID reader 102 between an active mode and a low power mode based at least on the detected position of the at least one RFID tag. Based on the low power mode or the active mode of the RFID reader 102, the system 100 may switch between the low power mode or the active mode, respectively. In some embodiments, the RFID reader 102 may operate in the active mode when the at least one RFID tag may be located at far away from the RFID reader 102. Further, the active mode may imply that the RFID reader 102 may operate at full capacity or in a normal energy consumption state. In some embodiments, the RFID reader 102 may operate in the low power mode when the at least one RFID tag may be located close to the RFID reader 102. Further, the low power mode may imply that the RFID reader 102 may operate in half capacity or in a reduced energy consumption state. The at least one radar sensor 106 may always be in "ON" state. In absence of any movement/ at least one RFID tag, the RFID reader 102 may put itself in low power mode with the at least one radar sensor 106 in "ON" state. The at least one radar sensor 106 may wake up the system 100, when the at least one radar sensor detects any movement of the at least one RFID tag, such that the system 100 switches to active mode. The system 100 may again switch back to low power mode when there may be no further movement beyond a certain time threshold. In one example embodiment, the certain time threshold may correspond to a time threshold of 10 seconds (s). The aforementioned switching of the RFID reader 102 may help to optimize energy consumption of the RFID reader 102, while maintaining the functionality of the RFD reader as required.

In some embodiments, the method 400 as discussed above, may combine accurate detection of at least one RFID tag, intelligent selection of the at least one antenna 104 and precise alignment of the selected at least one antenna 104 to properly read at least one RFID tag with the RFID reader 102. In some embodiments, the method 400 may be implemented or performed using the systems described herein. The steps also may be performed by a RFID reader or a controller, such that the controller operates as a specialized processing machine/specialized hardware. In some embodiments, the system(s) 100, 200, 300 and method 400 may help in inventory management while consuming very low power. Further, the system(s) 100, 200, 300 and the method 400 may provide 3D motion detection. Further, the system 100, 200, 300 may have very less deployment cost due to very less number of components and may not need any specialized tags for operation. It will be apparent to one skilled in the art that the systems 100, 200, 300, and method 400 may be installed outside the enclosed space 108 as well, without departing from the scope of the disclosure.

It should be noted that one or more embodiments can comprise one or more microprocessors (which may be embodied as a processor) and a memory, coupled via a system bus. The microprocessor can be provided by a general purpose microprocessor or by a specialized microprocessor (e.g., an ASIC). In one embodiment, the system can comprise a single microprocessor which can be referred to as a central processing unit (CPU). In another embodiment, one or more configurations described herein can comprise two or more microprocessors, for example, a CPU providing some or most of the scanning functionality and a specialized microprocessor performing some specific functionality, such as to determine distance information and correlate that information with the acquired image information. A skilled artisan would appreciate the fact that other schemes of processing tasks distribution among two or more microprocessors are within the scope of this disclosure. The memory can comprise one or more types of memory, including but not limited to: random-access-memory (RAM), non-volatile RAM (NVRAM), etc.

It should be noted that, for example, the various embodiments may communicate between components using different standards and protocols. For example, the wireless communication can be configured to support, for example, but not limited to, the following protocols: at least one protocol of the IEEE 802.11/802.15/802.16 protocol family, at least one protocol of the HSPA/GSM/GPRS/EDGE protocol family, TDMA protocol, UMTS protocol, LTE protocol, and/or at least one protocol of the CDMA/IxEV-DO protocol family.

The flowcharts and block diagrams in the Figures illustrate the architecture, functionality, and operation of possible implementations of systems, methods and computer program products according to various embodiments of the present disclosure. In this regard, each block in the flowchart or block diagrams may represent a module, segment, or portion of code, which comprises one or more executable instructions for implementing the specified logical function(s). It should also be noted that, in some alternative implementations, the functions noted in the block may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems which perform the specified functions or acts, or combinations of special purpose hardware and computer instructions.

The corresponding structures, materials, acts, and equivalents of any means or step plus function elements in the claims below are intended to include any structure, material, or act for performing the function in combination with other claimed elements as specifically claimed. The description of the present disclosure has been presented for purposes of illustration and description, but is not intended to be exhaustive or limited to embodiments in the form disclosed. Many modifications and variations will be apparent to those of ordinary skill in the art without departing from the scope and spirit of embodiments of the disclosure. The embodiments were chosen and described in order to best explain the principles of embodiments and practical application, and to enable others of ordinary skill in the art to understand embodiments with various modifications as are suited to the particular use contemplated.

Furthermore, as will be appreciated by one skilled in the art, aspects of the present disclosure may be embodied as a system, method, or computer program product. Accordingly, aspects of various embodiments may take the form of an entirely hardware embodiment, an entirely software embodiment (including firmware, resident software, micro-code, etc.) or an embodiment combining software and hardware aspects that may all generally be referred to herein as a "circuit," "module", "system" or "sub-system." In addition, aspects of the present disclosure may take the form of a computer program product embodied in one or more computer readable medium(s) having computer readable program code embodied thereon.

Any combination of one or more computer readable medium(s) may be utilized. The computer readable medium may be a computer readable signal medium or a computer readable storage medium. A computer readable storage medium may be, for example, but not limited to, an electronic, magnetic, optical, electromagnetic, infrared, or semiconductor system, apparatus, or device, or any suitable combination of the foregoing. More specific examples (a non-exhaustive list) of the computer readable storage medium include the following: an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM) or similar DVD-ROM and BD-ROM, an optical storage device, a magnetic storage device, or any suitable combination of the foregoing. In the context of this document, a computer readable storage medium may be any tangible medium that can contain, or store a program for use by or in connection with an instruction execution system, apparatus, or device.

A computer readable signal medium may include a propagated data signal with computer readable program code embodied therein, for example, in baseband or as part of a carrier wave. Such a propagated signal may take any of a variety of forms, including, but not limited to, electromagnetic, optical, or any suitable combination thereof. A computer readable signal medium may be any computer readable medium that is not a computer readable storage medium and that can communicate, propagate, or transport a program for use by or in connection with an instruction execution system, apparatus, or device.

Program code embodied on a computer readable medium may be transmitted using any appropriate medium, including but not limited to wireless, wireline, optical fiber cable, RF, etc., or any suitable combination of the foregoing. Computer program code for carrying out operations for one or more embodiments may be written in any combination of one or more programming languages, including an object oriented programming language such as Java, Smalltalk, C++ or the like and conventional procedural programming languages, such as the "C" programming language or similar programming languages. The program code may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider).

At least some of the present disclosure is described herein with reference to flowchart illustrations and/or block diagrams of methods, apparatus (systems) and computer program products according to embodiments described herein. It will be understood that each block of the flowchart illustrations and/or block diagrams, and combinations of blocks in the flowchart illustrations and/or block diagrams, can be implemented by computer program instructions. These computer program instructions may be provided to a processor of a general purpose computer, special purpose computer, or other programmable data processing apparatus to produce a machine, such that the instructions, which execute via the processor of the computer or other programmable data processing apparatus, create means for implementing the functions/acts specified in the flowchart and/or block diagram block or blocks.

These computer program instructions may also be stored in a computer readable medium that can direct a computer, other programmable data processing apparatus, or other devices to function in a particular manner, such that the instructions stored in the computer readable medium produce an article of manufacture including instructions which implement the function/act specified in the flowchart and/or block diagram block or blocks.

The computer program instructions may also be loaded onto a computer, other programmable data processing apparatus, or other devices to cause a series of operational steps to be performed on the computer, other programmable apparatus or other devices to produce a computer implemented process such that the instructions which execute on the computer or other programmable apparatus provide processes for implementing the functions/acts specified in the flowchart and/or block diagram block or blocks and when implemented in one or more embodiments, results in a transforming or converting a general purpose computer/processor/hardware to a specialized computer/processor/hardware that improves the technological art.

Many modifications and other embodiments of the inventions set forth herein will come to mind to one skilled in the art to which these inventions pertain having the benefit of the teachings presented in the foregoing descriptions and the associated drawings. Therefore, it is to be understood that the inventions are not to be limited to the specific embodiments disclosed and that modifications and other embodiments are intended to be included within the scope of the appended claims. Moreover, although the foregoing descriptions and the associated drawings describe example embodiments in the context of certain example combinations of elements and/or functions, it should be appreciated that different combinations of elements and/or functions may be provided by alternative embodiments without departing from the scope of the appended claims. In this regard, for example, different combinations of elements and/or functions than those explicitly described above are also contemplated as may be set forth in some of the appended claims. Although specific terms are employed herein, they are used in a generic and descriptive sense only and not for purposes of limitation.

## Claims

1. A system comprising:
at least one antenna coupled to a radio frequency identification (RFID) reader configured to read at least one RFID tag associated with at least one package; and
at least one radar sensor communicatively coupled to the RFID reader, and configured to:
detect a position of the at least one RFID tag associated with the at least one package;
wherein the RFID reader is configured to:
select the at least one antenna based on the detected position of the at least one RFID tag; and
direct the at least one antenna towards the detected position of the at least one RFID tag.

2. The system of claim 1, wherein the RFID reader is switched between an active mode and a low power mode based at least on detection of the at least one RFID tag.

3. The system of claim 1, wherein the RFID reader is configured to generate a directional RF beam to read the at least one RFID tag.

4. The system of claim 1, wherein the at least one antenna encompasses a defined zone inside an enclosed space.

5. The system of claim 4, wherein the position corresponds to location coordinates of the at least one RFID tag associated with the at least one package within the enclosed space.

6. The system of claim 4, wherein the enclosed space comprises at least one of a warehouse, a distribution center, a retail store, a delivery vehicle, a room, or a package car.

7. The system of claim 1, wherein the at least one radar sensor corresponds to a millimeter wave (mmwave) radar sensor.

8. A method comprising:
detecting, via at least one radar sensor, a position of at least one radio frequency identification (RFID) tag associated with at least one package;
activating, via the at least one radar sensor, a radio frequency identification (RFID) reader;
selecting, via the RFID reader, at least one antenna based on the detected position of the at least one RFID tag; and
directing, via the RFID reader, the at least one antenna towards the detected position of the at least one RFID tag.

9. The method of claim 8, further comprising:
switching the RFID reader between an active mode and a low power mode based at least on detection of the at least one RFID tag.

10. The method of claim 8, further comprising:
generating, via the RFID reader, a directional RF beam to read the at least one RFID tag.

11. The method of claim 8, wherein the at least one antenna encompasses a defined zone inside an enclosed space.

12. The method of claim 11, wherein the position corresponds to location coordinates of the at least one RFID tag associated with the at least one package within the enclosed space.

13. The method of claim 11, wherein the enclosed space comprises at least one of a warehouse, a distribution center, a retail store, a delivery vehicle, a room, or a package car.

14. The method of claim 8, wherein the at least one radar sensor corresponds to millimeter wave (mmwave) radar sensor.
